# FASCICULE DE BREVET EUROPEEN

(11) **EP 2 955 003 B1**
(45) Date de publication et mention de la délivrance du brevet: **02.01.2019**
(21) Numéro de dépôt: 15170319.6
(22) Date de dépôt: 02.06.2015
(51) Int. Cl.: B29C 65/16, B29C 65/78, B60Q 1/04, F21S 8/00, B29L 31/30, B29K 33/00

(54) **MACHINE DE SOUDAGE LASER POUR L'ASSEMBLAGE D'UN BOÎTIER ET D'UNE GLACE DE FEU DE VÉHICULE AUTOMOBILE**
LASER-SCHWEISSMASCHINE ZUM ZUSAMMENBAU EINES GEHÄUSES UND EINER SCHEINWERFERSCHEIBE EINES KRAFTFAHRZEUGS
LASER WELDING MACHINE FOR ASSEMBLING A HOUSING AND A LENS OF A MOTOR VEHICLE HEADLIGHT

(30) Priorité: 10.06.2014 FR 1455207
(43) Date de publication de la demande: 16.12.2015
(73) Titulaire: VALEO ILUMINACION, 23600 Martos (ES)
(72) Inventeur: CHOTARD, Alexandre, 23600 Martos (ES); PEREZ CARRERAS, Eduardo, 23600 Martos (ES); JIMENEZ VILLAR, Miguel Angel, 23600 Martos (ES); GONZALEZ HIGUERAS, Rafael, 23600 Martos (ES)

(56) Documents cités:
- SCHMAILZL ANTON ET AL: "Optimierung der Spanndruckverteilung beim Laserurhstrahlschweissen komplexer Bauteile mittels FE-Berechnung = Using FE calculation for the optimisation of the clamping pressure distribution in the case of the laser transmission welding of complex components", JOINING PLASTICS - FÜGEN VON KUNSTSTOFFEN,, vol. 7, no. 1, 1 janvier 2013 (2013-01-01) , pages 30-34, XP001586475, ISSN: 1864-3450
- RALF HÖGEL: "Robotergeführtes Halogen- und Laserlicht Kunststoff-Hybridschweissen", KUNSTOFFE, CARL HANSER VERLAG, MUNCHEN, DE, no. 1, 1 janvier 2011 (2011-01-01), pages 24-26, XP009147618, ISSN: 0023-5563
- FRANK BRUNNECKER ET AL: "Fuegen grosser Bauteile", KUNSTOFFE, CARL HANSER VERLAG, MUNCHEN, DE, vol. 103, no. 5, 1 janvier 2013 (2013-01-01), pages 28-31, XP001526601, ISSN: 0023-5563

## Description

Le domaine de la présente invention est celui de l'équipement des véhicules automobiles et, plus particulièrement, celui des feux pour l'éclairage et/ou la signalisation de ces véhicules

Les modules lumineux, par exemple les feux, des véhicules automobiles sont des ensembles à l'intérieur desquels on trouve, notamment, une ou plusieurs sources lumineuses, un réflecteur pour renvoyer vers l'extérieur le faisceau lumineux créé par cette ou ces sources, et des moyens de contrôle de la forme de ce faisceau. Ces éléments sont enfermés dans un boîtier qui porte une glace transparente au travers de laquelle passe le faisceau. Le boîtier et/ou la glace sont généralement réalisés dans des matériaux polymères, et sont assemblés l'un à l'autre de façon à garantir l'étanchéité de l'ensemble vis-à-vis de l'extérieur et notamment vis-à-vis des intempéries. L'assemblage de ces deux pièces, qui était auparavant réalisé par collage, tend de plus en plus à être réalisé par soudage, ce qui assure une meilleure garantie d'étanchéité, cette option étant rendue possible par le choix des matériaux utilisés.

Les machines de soudage généralement utilisées comportent un outil-support, sur lequel sont déposées, une première bride qui s'étend tout le long de la périphérie du boîtier et une seconde bride constituée par le bord externe de la glace. Un moyen de chauffage, tel qu'une plaque chauffante, une plaque vibrante ou une tête laser, est associé à cet outil pour faire fondre les deux pièces mises en contact et assurer leur solidarisation. Un moyen préférentiel est le soudage par laser qui présente l'avantage d'un positionnement précis et donc d'une largeur de soudure parfaitement contrôlée. La technique associée au soudage laser consiste à émettre un rayon qui traverse la glace du fait de sa transparence et qui vient chauffer la face supérieure du boîtier pour le faire fondre localement. La chaleur absorbée par le boîtier est restituée en partie à la glace qui fond également et qui vient se mélanger à la phase liquide ou pâteuse du boîtier pour former le joint de soudure.

Une des contraintes associées à ce soudage réside dans l'obtention d'une agrégation parfaite des deux éléments de façon que la chaleur se transmette bien vers la glace et que l'étanchéité soit correctement réalisée. La machine de soudage comporte donc généralement un moyen d'appui, du type roulette ou bille, qui suit le déplacement de la tête laser et presse continûment les deux pièces l'une contre l'autre, et contre une pièce support. Pour des raisons de non-interférence avec le faisceau ou avec le cordon de soudure, ce moyen d'appui est positionné latéralement par rapport à celui-ci, en référence à sa direction de déplacement. Le moyen d'appui n'étant pas aligné avec le faisceau, et donc étant décalé par rapport à la pièce support de la bride du boîtier et de l'extrémité de la glace, cette configuration génère un couple qui tend à faire basculer ces deux éléments et donc qui risque d'engendrer des défauts de maintien.

On connait par le document de Schmailzl Anton et al : « Using FE calculation for the optimisation of the clamping pressure distribution in the case of the laser transmission welding of complex components », Joining plastics - Fügen von Kunststoffen, vol. 7, no. 1, pages 30-34, 1 janvier 2013, que la pression de serrage de deux pièces en matière plastique à souder ensemble est déterminante pour la qualité de la soudure dans le soudage laser par transmission.

Le document de Ralf Högel : « Robotergefürhtes Halogen- und Laserlicht Kunststoff-Hybridschweissen », Kunstroffe, Carl Hanser Verlag, no. 1, pages 24-26, 1 janvier 2011, décrit l'utilisation de robot à six axes pour faciliter le soudage laser entre deux pièces en matière plastique.

Le document de Frank Brunnecker et al : « Fuegen grosser Bauteile », Kunstoffe, Carl Hanser Verlag, vol. 103, no. 5, pages 28-31, 1 janvier 2013, divulgue l'utilisation d'un rouleau d'application de pression le long du cordon de soudure qui, lui, est formé par une tête de soudage montée sur un bras articulé robotisé.

La présente invention a pour but de remédier aux inconvénients mentionnés ci-dessus en proposant un dispositif de soudage laser qui permet de souder l'extrémité d'une glace sur un boîtier, sans que les deux pièces risquent de se désassembler, notamment sous la pression des moyens d'appui.

A cet effet, l'invention a pour objet une machine de soudage par faisceau laser pour l'assemblage d'un boîtier et d'une glace , notamment d'un module lumineux pour véhicule automobile, ladite machine comprenant un bâti, porteur d'une tête laser, et une pièce de support desdits boîtier et/ou glace, ledit bâti portant un moyen d'appui dudit boîtier et/ou de ladite glace contre ladite pièce de support, ladite pièce de support comportant une face orientée en direction dudit faisceau, caractérisée en ce que ladite face est agencée, c'est à dire traitée et/ou conformée, pour la rendre antidérapante.

Par exemple, la pièce de support peut supporter le boitier, le boitier supportant lui-même la glace.

La friction apportée par cette face antidérapante permet de solidariser la face inférieure du boîtier avec la pièce de support et d'éviter un mouvement relatif des pièces à souder qui serait provoqué par le déplacement du moyen mobile d'appui.

Préférentiellement ledit bâti est apte à se déplacer le long de la périphérie dudit boîtier. Plus préférentiellement ledit moyen est décalé latéralement par rapport à la direction d'avancement du faisceau laser.

Avantageusement le point d'appui du moyen d'appui est situé en porte-à-faux par rapport à ladite pièce de support. Cette configuration, qui permet de réduire l'encombrement global de la machine de soudage et corrélativement de la bride du boîtier, est rendue possible par la présence de la face antidérapante sur sa pièce de support.

Dans un mode particulier de réalisation la pièce de support est une roue se déplaçant avec le faisceau laser en roulant sous la face inférieure dudit boîtier.

Dans un autre mode de réalisation de l'invention, le moyen d'appui est une roue se déplaçant avec le faisceau laser en roulant sur la face supérieure dudit boîtier ou de ladite glace.

Préférentiellement ladite face de la pièce de support et/ou de ladite glace est une face moletée. Un moletage consiste à réaliser des stries, soit droites soit croisées, sur une surface, dans le but de faciliter la manoeuvre d'une pièce ou d'obtenir une meilleure adhérence avec un autre composant. Les stries forment ainsi des dents.

Les dents du moletage assurent une bonne préhension sur le boîtier et une bonne solidarisation des pièces à souder.

De façon plus préférentielle le moletage comporte des dents en pointes de diamant.

Avantageusement la face moletée est réalisée en un matériau de dureté supérieure à celle des matériaux polymères, et préférentiellement à celle du polyméthacrylate de méthyle (PMMA). La plus grande dureté des dents, généralement en acier, fait qu'elles pénètrent dans le matériau plus tendre du boîtier et qu'elles assurent une accroche supérieure. Cette configuration permet également de contrôler a posteriori, si un module lumineux a été soudé à l'aide d'une machine comportant une pièce de support moletée. Dans un mode alternatif de réalisation la pièce de support est recouverte d'un revêtement antidérapant.

L'invention porte également sur un procédé d'assemblage par soudage laser d'un boîtier et d'une glace, notamment transparente, pour la réalisation d'un module, notamment un module lumineux, pour véhicule automobile, caractérisé en ce qu'il est mis en oeuvre sur une machine telle que décrite ci-dessus.

Elle porte enfin sur un boîtier pour la réalisation d'un module, notamment lumineux, de véhicule automobile par soudage à l'aide d'un faisceau laser d'une glace sur une partie périphérique dudit boîtier, caractérisé en ce que ladite partie périphérique, notamment un collet ou une bride, comporte une face agencée, c'est-à-dire traitée et/ou conformée, pour la rendre antidérapante.

Le terme périphérique signifie, ici, que le collet s'étend partiellement ou totalement sur le pourtour du boîtier.

Dans un mode particulier de réalisation ladite face est une face moletée.

Dans un autre mode particulier ladite face est recouverte d'un revêtement antidérapant.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue de côté, en coupe partielle, d'un poste de soudage laser du boîtier d'un module lumineux de véhicule, selon un mode de réalisation de l'invention ;
- la figure 2 est une vue de détail du poste de soudage de la figure 1 ;
- les figures 3 à 5 sont des vues de détail de la pièce de support des éléments à souder.

Dans la suite de la description la direction verticale s'entend en référence à la direction du faisceau laser et de la force d'appui qui est appliquée pour solidariser le boîtier avec la glace. La direction latérale ou transversale s'entend comme une direction dans un plan horizontal, perpendiculaire à la direction d'avancement de la tête laser.

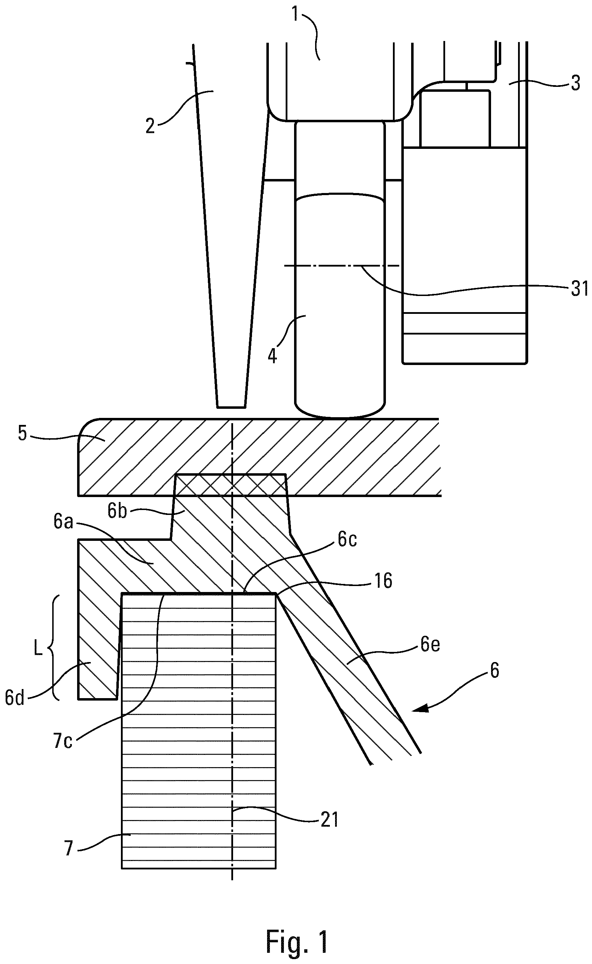

En se référant à la figure 1, on voit une machine de soudage laser comprenant un bâti 1 conformé pour se déplacer longitudinalement en décrivant la forme extérieure d'un boîtier de module lumineux de véhicule à souder. Ce bâti porte une tête laser (non représentée) qui émet un faisceau 2 orienté verticalement, c'est-à-dire, ici, vers le bas de la figure, le long d'un axe 21. Il comporte également une extension verticale 3 située latéralement par rapport à ce faisceau, sur laquelle est fixé un axe de rotation transversal 31. Cet axe porte une roulette 4 qui est entraînée en rotation par le déplacement du bâti 1, en restant parallèle au faisceau laser 2. Le bâti 1 génère une force d'appui sur la roulette 4 pour maintenir l'un contre l'autre un boîtier d'un module lumineux et une glace de fermeture du boîtier.

Sur la figure 1 est représentée l'extrémité latérale d'une glace 5, qui est en position sur le bâti 1 pour être soudée sur un boîtier 6.

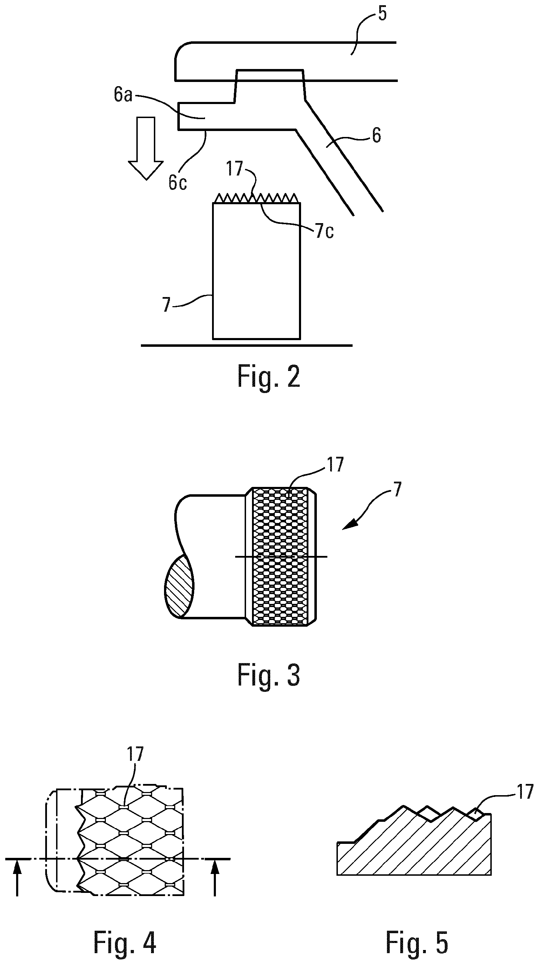

Alors que l'extrémité latérale de la glace 5 comporte deux faces, supérieure et inférieure, sensiblement planes et parallèles, le boîtier 6 comporte des parois 6e qui s'enfoncent verticalement pour former un volume interne dans lequel seront positionnés les équipements du module lumineux. La paroi 6e se termine vers l'extérieur, par une bride périphérique 6a, également désignée sous le terme de collet, qui est positionnée sur le bâti 1 parallèlement à l'extrémité de la glace 5. Le terme périphérique signifie, ici, que le collet s'étend partiellement ou totalement sur le pourtour du boîtier. Ce collet 6a porte sur sa face supérieure, c'est-à-dire la face en contact avec la face inférieure de la glace, une nervure de soudage 6b qui forme une protubérance et qui a pour objet de fournir de la matière pour le soudage de la glace 5. Telle qu'elle est représentée sur les figures 1 et 2, cette nervure de soudage 6b s'intègre dans la glace 5, pour indiquer que les matières des deux pièces s'entremêlent lors du soudage. Cette nervure de soudage court tout le long du collet périphérique 6a du boîtier 6, en étant sur tout ce parcours en contact avec la face inférieure de la glace 5, de façon à assurer la continuité du soudage et, in fine, l'étanchéité du module lumineux.

Une pièce de support 7 est positionnée, à titre d'exemple, sous la bride 6a du boîtier 6 et sert de soutien au boîtier, qui supporte lui-même la glace ; le boîtier et/ou la glace sont pressées contre la pièce de support par la roulette 4. La pièce de support 7 peut être une pièce fixe, indépendante du bâti 1, qui reproduit la forme en plan du boîtier tout le long de son collet 6a, ou bien une pièce mobile sous la forme d'une roue, comme cela est visible sur la figure 3, qui se déplace avec le bâti 1. Dans ce cas elle roule sur la face inférieure 6c du collet 6a du boîtier, de la même façon que la roulette 4 roule sur l'extrémité périphérique de la glace 5.

Sur la figure 1 on voit également une face inférieure 6c du collet 6a, du côté opposé à la nervure de soudage 6b. Cette face coopère avec une face correspondante 7c de la pièce de support 7 pour assurer son soutien à l'encontre de la force d'appui exercée par la roulette 4.

On remarque, par ailleurs, que la pièce de support 7 est positionnée latéralement en dessous de la nervure de soudage 6b et donc, en dessous du faisceau laser 2. Elle est par conséquent décalée par rapport au plan de la roulette 4. L'encombrement du module lumineux étant contraint, il n'est pas possible de prolonger latéralement le collet 6a, et corrélativement la pièce de support 7, de façon à ce qu'elles s'étendent jusqu'à venir en dessous de la roulette 4. Il convient donc de pallier le porte-à-faux généré par ce décalage en garantissant qu'un contact permanent s'établit entre la face inférieure 6c du collet 6a avec la face supérieure 7c de la pièce de support 7.

Pour cela deux dispositifs ont été imaginés. Le premier dispositif porte sur une configuration particulière de l'outil de soudage, qui est illustrée de façon plus détaillée sur les figures 2 à 5, alors que le second, qui est visible directement sur la figure 1, porte sur une forme particulière donnée au collet du boîtier.

La face inférieure 6c du collet du boîtier est plane, de même que la face supérieure 7c de la pièce de support, sans que cette forme soit impérative, l'essentiel étant que les deux faces aient des formes transversales en miroir, de façon à fournir un maintien au collet 6a du boîtier par la plus grande surface possible.

La pièce de support 7 a la forme d'une roue et sa face supérieure 7c est traitée et/ou conformée pour la rendre antidérapante. Dans le mode de réalisation représenté sur les figures 2 et 3 la face supérieure 7c est recouverte d'un moletage 17, qui est illustré, à titre d'exemple, de façon plus détaillée sur les figures 4 et 5. Un moletage consiste à réaliser des stries, soit droites soit croisées, sur une surface, dans le but de faciliter la manoeuvre d'une pièce ou d'obtenir une meilleure adhérence avec un autre composant. Le moletage représenté sur la figure 2 présente des dents disposées en pointes de diamant qui s'étendent en direction de la face inférieure 6c du boîtier et qui génèrent un coefficient de friction élevée avec cette face. Ce coefficient de friction élevé, associé à un contact entre les deux pièces qui s'étend sur toute la largeur de la pièce de support 7, garantit un contact de bonne qualité entre la pièce de support 7 et la face inférieure du boîtier 6, et évite tout basculement des pièces à souder, en dépit du porte-à-faux existant. Dans une version alternative (non représentée) la face inférieure 6c du boîtier peut présenter également un moletage, qui soit coopère avec, soit remplace le moletage 17 mis en place sur la pièce de support 7.

Dans un autre exemple, non illustré, la face supérieure 7c de la pièce de support 7 et/ou la face inférieure 6c du boîtier 6 sont recouvertes d'un matériau antidérapant, tel, par exemple, que d'une couche caoutchoutée. Le but poursuivi est, comme précédemment, d'éviter tout déplacement relatif des deux faces du fait du porte-à-faux créé par le décalage latéral entre le moyen d'appui 4 et la pièce de support 7.

La pièce de support est généralement en acier et le boîtier en un matériau polymère tel que du polyméthacrylate de méthyle (PMMA). Du fait de la pression qu'il est nécessaire d'appliquer sur la roulette 4 pour maintenir en place les deux éléments à souder, les dents de moletage s'impriment dans le matériau du collet 6a, au niveau de sa face inférieure 6c, sans que ce marquage ne représente un défaut qui serait préjudiciable à la bonne tenue mécanique du collet ou à l'esthétique du module lumineux. Il constitue au contraire une garantie contre un basculement des pièces à souder.

Le deuxième dispositif, qui est mis en oeuvre lorsque l'encombrement autour du boîtier le permet, consiste, comme cela apparaît sur la figure 1, à encadrer latéralement les deux faces latérales de la pièce de support 7, par des nervures formant butées. Du côté interne la forme du boîtier 6 est telle qu'elle s'étend naturellement en direction du bas, c'est-à-dire du côté opposé à la glace 5, par sa paroi 6e pour créer un volume interne au boîtier. De ce fait le collet 6a se raccorde à la paroi adjacente du boîtier par une cassure 16, qui forme alors un point de butée, en direction du centre du boîtier 6, pour la face supérieure 7c de la pièce de support 7. Ce deuxième dispositif consiste alors dans le positionnement d'une seconde paroi de butée du côté opposé, c'est-à-dire à l'extrémité externe du collet 6a. Cette seconde butée est formée par une nervure d'extrémité 6d qui s'étend verticalement, vers le bas, à partir du collet 6a et qui vient longer la face extérieure de la pièce de support 7. Son positionnement en latéral est tel que la distance entre cette nervure d'extrémité 6d et le point de cassure 16 est sensiblement égal, et très légèrement supérieur, à la largeur de la face supérieure 7c de la pièce de support. Sa longueur verticale est avantageusement égale ou supérieure à 2 mm pour assurer le maintien du boîtier contre un éventuel basculement. Enfin elle présente une orientation, de préférence légèrement divergente par rapport au plan de déplacement du bâti 1 de sorte que l'intégration de la pièce de support 7 dans la gorge de retenue créée par le collet 6a et ses deux parois latérales 6d et 6e soit facilitée par cette forme en dépouille.

## Revendications

1. Machine de soudage par faisceau laser (2) pour l'assemblage d'un boîtier (6) et d'une glace (5) d'un module, notamment lumineux, pour véhicule automobile, ladite machine comprenant un bâti (1) porteur d'une tête laser, et une pièce de support (7) desdits boîtier et/ou glace, ledit bâti portant un moyen (4) d'appui dudit boîtier et/ou de ladite glace contre ladite pièce de support, ladite pièce de support (7) comportant une face (7c) de contact avec ledit boitier et/ou ladite glace, notamment orientée en direction dudit faisceau,
**caractérisée en ce que** ladite face (7c) est agencée pour la rendre antidérapante.

2. Machine selon la revendication 1 dans laquelle ledit bâti (1) est apte à se déplacer le long de la périphérie dudit boîtier.

3. Machine selon la revendication 2 dans laquelle ledit moyen est décalé latéralement par rapport à la direction d'avancement du faisceau laser (2).

4. Machine selon l'une des revendications 1 à 3 dans laquelle le point d'appui du moyen d'appui est situé en porte-à-faux par rapport à ladite pièce de support (7).

5. Machine selon l'une des revendications 1 à 4 dans laquelle la pièce de support (7) est une roue se déplaçant avec le faisceau laser (2) en roulant sous la face inférieure (6c) dudit boîtier.

6. Machine selon l'une des revendications 1 à 4 dans laquelle le moyen d'appui (4) est une roue se déplaçant avec le faisceau laser (2) en roulant sur la face supérieure dudit boîtier (6) ou de ladite glace (5).

7. Machine selon l'une des revendications 6 dans laquelle ladite face (7c) de la pièce de support et/ou de la glace est une face moletée (17).

8. Machine selon la revendication 7 dans laquelle le moletage comporte des dents en pointes de diamant.

9. Machine selon l'une des revendications 7 ou 8 dans laquelle la face moletée est réalisée en un matériau de dureté supérieure à celle des matériaux polymères.

10. Machine selon la revendication 8 dans laquelle la face moletée est réalisée en un matériau de dureté supérieure à celle du polyméthacrylate de méthyle (PMMA).

11. Machine selon l'une des revendications 1 à 9 dans laquelle la pièce de support (7) est recouverte d'un revêtement antidérapant.

12. Procédé d'assemblage par soudage laser d'un boîtier (6) et d'une glace, notamment transparente (5), pour la réalisation d'un module, notamment lumineux, pour véhicule automobile,
**caractérisé en ce qu'**il est mis en oeuvre sur une machine selon l'une des revendications 1 à 11.

13. Boîtier pour la réalisation d'un module, notamment lumineux, de véhicule automobile par soudage à l'aide d'un faisceau laser d'une glace (5) sur une partie périphérique (6a) dudit boîtier (6),
**caractérisé en ce que** ladite partie périphérique, notamment un collet, comporte une face (6c) agencée de manière à la rendre antidérapante.

14. Boîtier selon la revendication 13 dans lequel ladite face est une face moletée (6c).

15. Boîtier selon l'une des revendications 13 ou 14 dans lequel ladite face (6c) est recouverte d'un revêtement antidérapant.

## Patentansprüche

1. Maschine (2) zum Laserstrahlschweißen für die Montage eines Gehäuses (6) und eines Glases (5) eines Moduls, insbesondere eines Lichtmoduls, für Kraftfahrzeuge, wobei die Maschine einen Rahmen (1), der einen Laserkopf trägt, und ein Teil (7) zum Tragen des Gehäuses und/oder des Glases umfasst, wobei der Rahmen ein Mittel (4) zum Abstützen des Gehäuses und/oder des Glases an dem Tragteil trägt, wobei das Tragteil (7) eine Fläche (7c) für den Kontakt mit dem Gehäuse und/oder dem Glas aufweist, die insbesondere in Richtung des Strahls orientiert ist,
**dadurch gekennzeichnet, dass** die Fläche (7c) rutschhemmend beschaffen ist.

2. Maschine nach Anspruch 1, wobei sich der Rahmen (1) längs des Umfangs des Gehäuses verlagern kann.

3. Maschine nach Anspruch 2, wobei das Mittel in Bezug auf die Ausbreitungsrichtung des Laserstrahls (2) seitlich versetzt ist.

4. Maschine nach einem der Ansprüche 1 bis 3, wobei der Abstützpunkt des Abstützmittels in Bezug auf das Tragteil (7) überhängend angeordnet ist.

5. Maschine nach einem der Ansprüche 1 bis 4, wobei das Tragteil (7) ein Rad ist, das sich mit dem Laserstrahl (2) verlagert, indem es unter der unteren Fläche (6c) des Gehäuses rollt.

6. Maschine nach einem der Ansprüche 1 bis 4, wobei das Abstützmittel (4) ein Rad ist, dass sich mit dem Laserstrahl (2) verlagert, indem es auf der oberen Fläche des Gehäuses (6) oder des Glases (5) rollt.

7. Maschine nach einem der Ansprüche 6, wobei die Fläche (7c) des Tragteils und/oder des Glases eine gerändelte Fläche (17) ist.

8. Maschine nach Anspruch 7, wobei die Rändelung Zähne aus Diamantspitzen umfasst.

9. Maschine nach einem der Ansprüche 7 oder 8, wobei die gerändelte Fläche aus einem Material hergestellt ist, dessen Härte höher als jene von Polymermaterialien ist.

10. Maschine nach Anspruch 8, wobei die gerändelte Fläche aus einem Material hergestellt ist, dessen Härte höher als jene von Methyl-Polymethacrylat (PMMA) ist.

11. Maschine nach einem der Ansprüche 1 bis 9, wobei das Tragteil (7) mit einer rutschhemmenden Beschichtung bedeckt ist.

12. Verfahren für die Zusammenfügung eines Gehäuses (6) und eines insbesondere lichtdurchlässigen Glases (5) durch Laserschweißen, um ein Modul, insbesondere ein Lichtmodul, für Kraftfahrzeuge herzustellen,
**dadurch gekennzeichnet, dass** es in einer Maschine nach einem der Ansprüche 1 bis 11 ausgeführt wird.

13. Gehäuse für die Herstellung eines Moduls, insbesondere eines Lichtmoduls, für Kraftfahrzeuge durch Schweißen eines Glases (5) auf einen Umfangsabschnitt (6a) des Gehäuses (6) mithilfe eines Laserstrahls,
**dadurch gekennzeichnet, dass** der Umfangsabschnitt, insbesondere ein Flansch, eine Fläche (6c) aufweist, die rutschhemmend beschaffen ist.

14. Gehäuse nach Anspruch 13, wobei die Fläche eine gerändelte Fläche (6c) ist.

15. Gehäuse nach einem der Ansprüche 13 oder 14, wobei die Fläche (6c) mit einer rutschhemmenden Beschichtung abgedeckt ist.

## Claims

1. Laser beam welding machine (2) for assembling a housing (6) and an outer lens (5) of a module, notably a lighting module, for motor vehicles, said machine including a frame (1) carrying a laser head, and a support part (7) for said housing and/or said outer lens, said frame carrying means (4) for pressing said housing and/or said outer lens against said support part, said support part (7) including a contact face (7c) with said housing and/or said outer lens, notably oriented in the direction of said beam,
**characterized in that** said face (7c) is adapted to render it non-slip.

2. Machine according to Claim 1 wherein said frame (1) is able to move along the periphery of said housing.

3. Machine according to Claim 2 wherein said means are offset laterally relative to the direction of advance of the laser beam (2).

4. Machine according to any one of Claims 1 to 3 wherein the pressing point of the pressing means is cantilevered relative to said support part (7).

5. Machine according to any one of Claims 1 to 4 wherein the support part (7) is a wheel moving with the laser beam (2) by rolling on the underside of the lower face (6c) of said housing.

6. Machine according to any one of Claims 1 to 4 wherein the pressing means (4) comprise a wheel moving with the laser beam (2) by rolling on the upper face of said housing (6) or said outer lens (5).

7. Machine according to any one of Claims 6 wherein said face (7c) of the support part and/or the outer lens is a knurled face (17).

8. Machine according to Claim 7 wherein the knurling includes diamond point teeth.

9. Machine according to either one of Claims 7 and 8 wherein the knurled face is made from a material of greater hardness than the polymer materials.

10. Machine according to Claim 8 wherein the knurled face is made from a material of greater hardness than polymethylmethacrylate (PMMA).

11. Machine according to any one of Claims 1 to 9 wherein the support part (7) is covered with a non-slip coating.

12. Method of assembling by laser welding a housing (6) and an outer lens, notably a transparent outer lens (5), for the production of a module, notably a lighting module, for motor vehicles,
**characterized in that** it is implemented on a machine according to any one of claims 1 to 11.

13. Housing for the production of a module, notably a lighting module, for motor vehicles by welding using a laser beam an outer lens (5) to a peripheral portion (6a) of said housing (6), **characterized in that** said peripheral portion, notably a collar, includes a face (6c) adapted in such a manner as to render it non-slip.

14. Housing according to Claim 13 wherein said face (6c) is a knurled face.

15. Housing according to either one of Claims 13 and 14 wherein said face (6c) is covered with a non-slip coating.
